Europäisches Patentamt

**European Patent Office**

Office européen des brevets

(19)

(11) Veröffentlichungsnummer: **0 088 366**
**B1**

(12)

# EUROPÄISCHE PATENTSCHRIFT

(45) Veröffentlichungstag der Patentschrift:
**16.09.87**

(51) Int. Cl.⁴: **F 16 B 25/00**

(21) Anmeldenummer: **83102069.8**

(22) Anmeldetag: **03.03.83**

(54) **Gewindeselbstformende Schraube.**

(30) Priorität: **05.03.82 DE 3207975**

(43) Veröffentlichungstag der Anmeldung:
**14.09.83 Patentblatt 83/37**

(45) Bekanntmachung des Hinweises auf die Patenterteilung:
**16.09.87 Patentblatt 87/38**

(84) Benannte Vertragsstaaten:
**AT CH DE FR GB IT LI NL SE**

(56) Entgegenhaltungen:
**DE - A - 2 240 528**
**DE - A - 2 912 924**
**FR - A - 876 474**
**FR - A - 1 108 679**
**US - A - 2 347 360**

(73) Patentinhaber: **RICHARD BERGNER GMBH & CO,**
**Bahnhofstrasse 8-16, D-8540 Schwabach (DE)**

(72) Erfinder: **Ehrenstein, Gottfried, Prof., Dr.-Ing.,**
**Schwarzenbergstrasse 60, D-3500 Kassel (DE)**
Erfinder: **Onasch, Jürgen, Dipl.-Ing., Wilhelmshöher**
**Allee 73, D-3500 Kassel (DE)**

(74) Vertreter: **Tergau, Enno et al,**
**Hefnersplatz 3 Postfach 11 93 47,**
**D-8500 Nürnberg 11 (DE)**

ACTORUM AG

### Beschreibung

Die Erfindung betrifft eine Schraube mit den im Oberbegriff des Patentanspruches 1 aufgeführten Merkmalen. Bei einer aus DE-A-2 240 528 bekannten, besonders zum Einschrauben von Gipsplatten bestimmten Schraube der eingangs genannten Art ist zwischen den einander benachbarten Gewindeflanken des schneidenden Gewindeganges ein Wulstgang von geringerem Durchmesser als der Gewindegang angeordnet. Die beiden Flanken des schneidenden Gewindeganges bilden ausgehend von der Flankenspitze bis zum Beginn der Ausrundung der Flankenlinie am Gewindegrund einen konstanten Winkel, wie er auch bei einem metrischen Gewinde vorliegt. Bei einer weiterhin aus DE-A-2 912 924 bekannten, gewindeselbstformenden Schraube bildet die Flankenlinie ausgehend von der Gewindespitze bis zum Gewindegrund den Teil eines Kreisbogens. Diese Schraube soll sich besonders für das Einschrauben in Porenbeton oder Leichtbausteine eignen.

Eine aus FR-A-876 474 bekannte Holzschraube weist ein asymmetrisches Gewindeprofil auf, dessen tragende Flanken einen konstanten Flankenwinkel aufweisen.

Der Erfindung liegt die Aufgabe zugrunde, eine gewindeselbstformende Schraube der eingangs genannten Art so auszubilden, dass sie besonders zum Einsatz in Kunststoffen geeignet ist. Diese Aufgabe wird durch die im kennzeichnenden Teil des Patentanspruches 1 aufgeführten Merkmale gelöst.

Durch die erfindungsgemässe Profilgebung wird der während des Einschraubvorganges durch plastische Deformation und Reibung erheblich erwärmte Kunststoff besonders günstig in den Gewindegrund abgeführt. Dadurch werden eine Rissbildung und ein Aufplatzen des Einschraubauges vermieden. Das durch die Schraube geschnittene Gewinde zeichnet sich durch eine höhere Festigkeit gegen Abscheren der geschnittenen Gewindegänge aus.

Durch die im Bereich der Flankenspitze vergleichsweise schlanken Gewindeflanken wird beim Eindrehen der Schraube nur ein verhältnismässig geringes Kunststoffvolumen verdrängt. Durch die Formgebung des Gewindeprofils ergibt sich ein gleitender, kerbfreier Übergang von den tragenden Gewindeflanken zum Gewindegrund, was zur Herabsetzung des Eindrehmoments und zur weiteren Verminderung der Kunststoffbeanspruchung führt. Im Bereich des Gewindegrundes wird ein Werkstoffstau durch hohe, radiale, das Einschraubauge auseinandertreibende Staudrücke vermieden. Dadurch können bei duktilen Thermoplasten kleinere Kernlochdurchmesser gewählt werden, was eine höhere Belastbarkeit der Schraubverbindung ermöglicht.

Die Kennzeichnungsmerkmale der Unteransprüche sind auf geometrische Ausführungsformen gerichtet, die sich beim Einsatz in einer Vielzahl von Kunststoffen gut bewährt haben.

Es ist allgemein bei Schrauben mit konstantem Flankenwinkel bekannt, dass diese durch grössere oder kleinere Dimensionierung des Kernlochdurchmessers an die Sprödigkeit bzw. die Duktilität des jeweiligen Kunststoffwerkstoffes anpassbar sind. Bei Schraubverbindungen an Kunststoffteilen unter Verwendung selbstschneidender Metallschrauben (Blech- oder Holzschrauben) beträgt der Kernlochdurchmesser ca. 0,8 d, wobei d der Schraubgewindedurchmesser ist («Kunststoffverarbeitung», 2. Auflage, Vogel-Buchverlag, Würzburg (DE), S. 204). Bei Verwendung des erfindungsgemässen Gewindeprofils wird durch die Wahl eines grösseren oder kleineren Kernlochdurchmessers zusätzlich der in Eingriff gelangende Flankenwinkel verändert. Beispielsweise empfiehlt sich für besonders spröde Kunststoffe und grosse Schraubenabmessungen ein Kernlochdurchmesser von $0,95\ d_1$, wobei $d_1$ der Aussendurchmesser der Schraube ist. Bei einem derartigen Kernlochdurchmesser ergibt sich ein mittlerer Flankenwinkel von etwa 31°. Bei einem Kernlochdurchmesser von $0,7\ d_1$ hingegen ergibt sich ein mittlerer Flankenwinkel von etwa 55°. Dieser bei $0,7\ d_1$ um fast 80% grössere effektive Flankenwinkel kann bei duktilen Werkstoffen die Belastbarkeit der Verbindung durch zusätzliche Verspannung, nämlich durch die vergrösserte Radialkomponente der äusseren Last, erheblich steigern. Eine derart gezielte Anpassung an den Kunststoff allein durch die Wahl des Kernlochdurchmessers ist bei einem konstanten Flankenwinkel nicht möglich, ergibt sich jedoch bei der erfindungsgemässen Ausgestaltung des Gewindeprofils.

Die Erfindung ist anhand eines in der Zeichnung dargestellten Ausführungsbeispieles näher erläutert. Es zeigen:

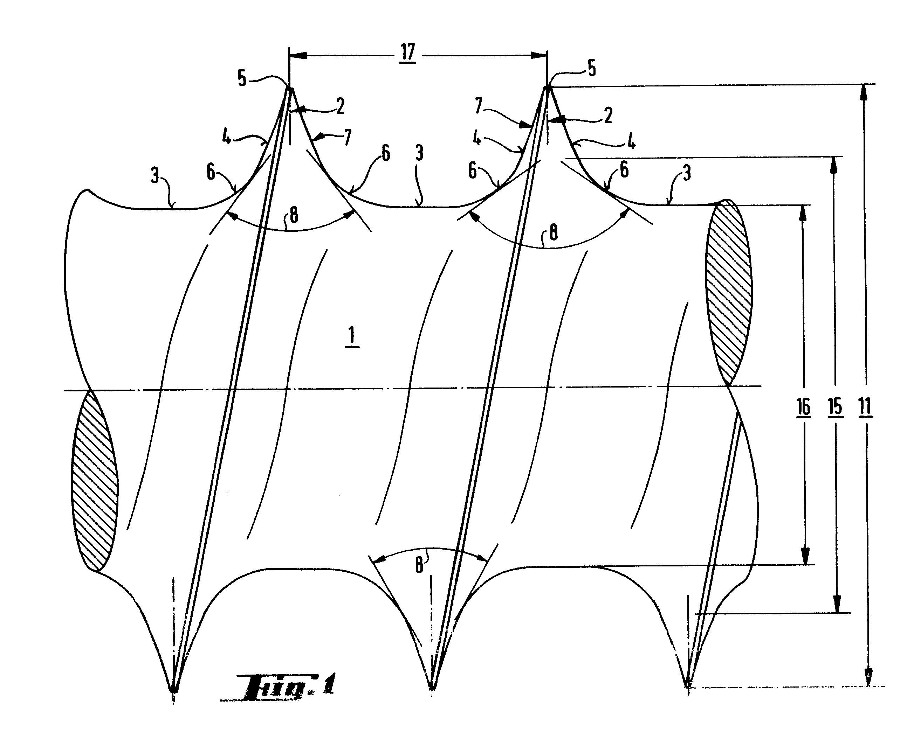

Fig. 1 eine Seitenansicht eines Teils des Gewindes der erfindungsgemässen Schraube und

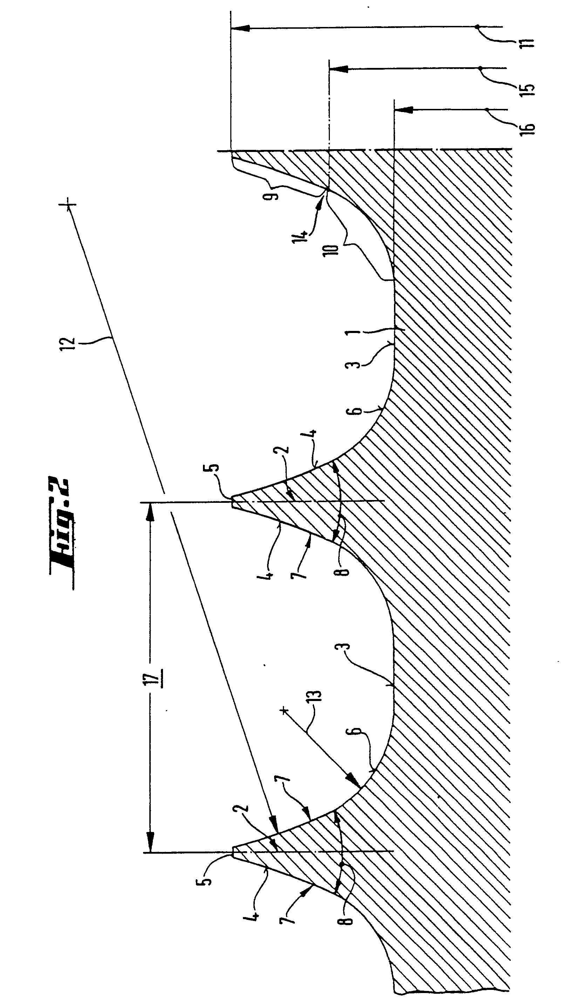

Fig. 2 einen Mittellängsschnitt durch einen Teil des Gewindes.

Die gewindefurchende Schraube besteht im wesentlichen aus einem nicht dargestellten Schraubenkopf und einem Schraubenkern 1, der von einem ein- oder mehrgängigen Schneidgewinde 2 umgeben ist. Das Schneidgewinde 2 steht derart vom dem durch die Oberfläche des Schraubenkerns 1 gebildeten Gewindegrund 3 ab, dass sich die Steigungen seiner Flankenlinien 4 von der Flankenspitze 5 bis zum Gewindegrund 3 ändern.

Der Übergang 6 vom Gewindegrund 3 zu den Flanken 7 des Schneidgewindes 2 ist ausgerundet. Der Flankenwinkel 8 ändert sich stetig von der Flankenspitze 5 zum Gewindegrund 3 von 30° (an der Flankenspitze 5) bis 180° (im Bereich des Gewindegrundes 3). Die Flankenwinkeländerung ist im radialäusseren Bereich 9 kleiner als im radialinneren Bereich 10 des Schneidgewindes 2 und ist derart ausgekrümmt, dass er im äusseren Bereich 9 durch einen das 0,8fache des Aussendurchmessers 11 betragenden ersten Radius 12 und im radialinneren Bereich 10 durch einen das 0,135fache des Aussendurchmessers 11 betragenden zweiten Radius 13 beschrieben wird. Der Übergang von der kleinen, durch den zweiten Radius 13 beschriebenen Flankenwinkeländerung zur grossen, durch den ersten Radius 12 beschriebenen Flankenwinkeländerung liegt im Bereich des Flankendurchmessers 15, der das 0,76fache des Aussendurchmessers 11 beträgt. Der Kerndurchmesser 16 hat das 0,6fache des Aussendurchmessers 11, die Steigung 17 der Schraube beträgt das 0,42fache des Aussendurchmessers 11.

Bei einem duktilen Thermoplast (z. B. ABS, SB, PE, PP), wird für eine 5-mm-Schraube ein Kernlochdurchmesser von 3,7 bis 3,9 mm empfohlen. Für diesen Fall variiert dann der im Eingriff befindliche Flankenwinkel des Schneidgewindes 2 zwischen etwa 30° und 50°. Bei spröden Thermoplasten hingegen, z. B. bei PS, PMMA und SAN, oder bei glasfaserverstärkten Thermoplasten und Duroplasten wird für eine Schraube mit einem Aussendurchmesser von 5 mm ein Kernlochdurchmesser von etwa 4,3 bis 4,5 mm empfohlen. Für diesen Fall variiert der im Eingriff befindliche Flankenwinkel zwischen etwa 30° und 40°. Die erfindungsgemässe Schraubengeometrie ergibt durch die Vermeidung von scharfen Kerben im Flankenprofil eine erhöhte Festigkeit im Gewinde sowohl gegen Torsionsbeanspruchung als auch gegen Zugbeanspruchung. Dies bedeutet, dass die Eigenfestigkeit der Schraube durch verminderte Kerbfaktoren am Schraubengewinde erhöht wird.

Bezugszeichenliste
1 Schraubenkern
2 Schneidgewinde
3 Gewindegrund
4 Flankenlinie
5 Flankenspitze
6 Übergang
7 Flanken
8 Flankenwinkel
9 radial äusserer Bereich
10 radial innerer Bereich
11 Aussendurchmesser
12 Radius (gross)
13 zweiter Radius
14 Übergang
15 Flankendurchmesser
16 Kerndurchmesser
17 Steigung

**Patentansprüche**

1. Gewindeselbstformende Schraube mit einem Schneidgewinde (2) mit symmetrischem Gewindeprofil, mit einem Flankenwinkel (8) an der Flankenspitze (5) von etwa 20°, vorzugsweise 30°, mit einer Ausrundung der Flankenlinie (4) am Gewindegrund (3), an dem der Flankenwinkel (8) 180° beträgt und mit einem Gewindekerndurchmesser (16) von etwa dem 0,5- bis 0,7-fachen, vorzugsweise dem 0,6-fachen des Aussendurchmessers (11), dadurch gekennzeichnet, dass die Flankenwinkeländerung im radial äusseren Bereich (9) des Gewindeprofils kleiner ist als im radial inneren Bereich (10) und dass die Gewindesteigung (17) etwa das 0,3- bis 0,5-fache, vorzugsweise das 0,42-fache des Gewindeaussendurchmessers (11) beträgt.

2. Schraube nach Anspruch 1, dadurch gekennzeichnet, dass der Übergang (14) von der kleinen zur grossen Flankenwinkeländerung etwa im Bereich des Flankendurchmessers (15) liegt.

3. Schraube nach mindestens einem der vorhergehenden Ansprüche, dadurch gekennzeichnet, dass die Flankenlinie (4) die Form von zwei ineinander übergehenden Kreisbögen mit unterschiedlichen Radien (12, 13) hat.

4. Schraube nach mindestens einem der vorhergehenden Ansprüche, dadurch gekennzeichnet, dass der Radius (13) des die Flankenlinie (4) innerhalb des Flankendurchmessers (15) beschreibenden Kreisbogens etwa das 0,1- bis 0,3-fache, vorzugsweise das 0,135-fache, der Radius (12) des die Flankenlinie (4) ausserhalb des Flankendurchmessers (15) beschreibenden Kreisbogens etwa das 0,6- bis 1-fache, vorzugsweise 0,8-fache des Aussendurchmessers (11) beträgt.

5. Schraube nach mindestens einem der vorhergehenden Ansprüche, dadurch gekennzeichnet, dass der Flankendurchmesser (15) etwa das 0,6- bis 0,8-fache, vorzugsweise das 0,76-fache des Aussendurchmessers (11) beträgt.

6. Schraube nach mindestens einem der vorhergehenden Ansprüche, dadurch gekennzeichnet, dass die Spitze der Flanken (7) abgeflacht ist.

7. Verwendung der Schraube nach einem oder mehreren der Ansprüche 1 bis 6 durch Einschrauben in ein Kernloch in duktilen und spröden Thermoplasten, Duroplasten, verstärkten Thermoplasten und Duroplasten sowie geschichteten Laminaten aus Thermoplasten und Duroplasten, dadurch gekennzeichnet, dass der Kernlochdurchmesser zwischen 0,7 und 0,95 des Aussendurchmessers der Schraube beträgt, wobei der niedrige Faktor für sehr duktile und der höhere für sehr spröde Kunststoffe gilt.

**Claims**

1. Self-tapping screw having a cutting thread (2) having: – a symmetrical thread profile; a flank angle (8) at the flank tip (5) of approximately 20°, preferably 30°; a rounding-off of the flank line (4) at the thread root (3), at which the flank angle (8) amounts to 180°; and a thread root diameter (16) of approximately 0.5 to 0.7 times, preferably 0.6 times the thread tip diameter (11); characterized in that the flank angle variation is smaller in the radially outer region (9) of the thread profile than in the radially inner region (10); and in that the thread pitch lead (17) is approximately 0.3 to 0.5 times, preferably 0.42 times, the thread tip diameter (11).

2. A screw according to claim 1, characterized in that the transition (14) from the small to the large variation of flank angle is disposed approximately in the region of the flank diameter (15).

3. A screw according to at least one of the preceding claims, characterized in that the flank line (4) has the shape of two circular arcs, merging into one another, having differing radii (12, 13).

4. A screw according to at least one of the preceding claims, characterized in that the radius (13) of the circular arc describing the flank line (4) within the flank diameter (15) amounts to approximately 0.1 to 0.3 times, preferably 0.135 times, the thread tip diameter; and in that the radius (12) of the circular arc describing the flank line (4) outside the flank diameter (15) amounts to approximately 0.6 to 1 times, preferably 0.8 times, the thread tip.

5. A screw according to at least one of the preceding claims, characterized in that the flank diameter (15) amounts to approximately 0.6 to 0.8 times, preferably 0.76 times the thread tip diameter (11).

6. A screw according to at least one of the preceding claims, characterized in that the tip of the flanks (7) is flattened off.

7. The application of the screw according to one or more of claims 1 to 6 by screwing into a core hole in ductile and brittle thermoplastic materials, thermosetting plastic materials, reinforced thermoplastic materials and thermosetting plastic materials, as well as layered laminates of thermoplastic materials and thermosetting plastic materials, characterized in that the core hole diameter amounts to between 0.7 and 0.95 times the thread tip diameter of the screw, the lower factor being applicable to very ductile materials and the higher factor for very brittle plastic materials.

**Revendications**

1. Vis autotaraudeuse présentant un filet coupant (2) à profil de filet symétrique, un angle de flanc (8) à la pointe du flanc (5) d'environ 20°, de préférence 30°, un arrondi de la ligne de flanc (4) à fond de filet (3), où l'angle de flanc (8) atteint 180° et présentant un diamètre de noyau de filet (16) d'environ 0,5 à 0,7 fois, de préférence 0,6 fois le diamètre extérieur (11), caractérisée en ce que la modification de l'angle de flanc dans la zone radialement extérieure (9) du profil du filet est plus petite que dans la zone radialement intérieure (10); et en ce que le pas du filet (17) est d'environ 0,3 à 0,5 fois, de préférence 0,42 fois le diamètre extérieur du filet (11).

2. Vis selon la revendication 1, caractérisée en ce que la transition (14) entre la petite modification de l'angle de flanc et la grande modification se situe à peu près dans la zone du diamètre sur flanc (15).

3. Vis selon au moins l'une des revendications précédentes, caractérisée en ce que la ligne de flanc (4) a la forme de deux arcs de cercle de rayons différents (12, 13) se transformant l'un dans l'autre.

4. Vis selon au moins l'une des revendications précédentes, caractérisée en ce que le rayon (13) de l'arc de cercle qui décrit la ligne de flanc (4) à l'intérieur du diamètre sur flanc (15) est d'environ 0,1 à 0,3 fois, de préférence 0,135 fois le diamètre extérieur; et en ce que le rayon (12) de l'arc de cercle qui décrit la ligne de flanc (4) à l'extérieur du diamètre sur flanc (15) est d'environ 0,6 à 1, de préférence 0,8 fois le diamètre extérieur.

5. Vis selon au moins l'une des revendications précédentes, caractérisée en ce que le diamètre sur flanc (15) est d'environ 0,6 à 0,8 fois, de préférence 0,76 fois le diamètre extérieur (11).

6. Vis selon au moins l'une des revendications précédentes, caractérisée en ce que la pointe des flancs (7) est aplatie.

7. Emploi de la vis selon une ou plusieurs des revendications 1 à 6 par vissage dans un trou de noyau dans des matériaux plastiques ductiles et fragiles, thermoplastiques, thermodurcissables, thermoplastiques et thermodurcissables armés, ainsi que stratifiés de produits thermoplastiques et thermodurcissables, caractérisé en ce que le diamètre du trou de noyau se situe entre 0,7 et 0,95 du diamètre extérieur de la vis, étant précisé que le facteur le plus bas est valable pour des plastiques très ductiles et le facteur le plus élevé l'est pour des plastiques très fragiles.

Fig. 1

Fig.2

0 088 366